# EUROPÄISCHE PATENTSCHRIFT

(11) **EP 0 939 270 B1**
(45) Veröffentlichungstag und Bekanntmachung des Hinweises auf die Patenterteilung: **05.12.2001**
(21) Anmeldenummer: 99102083.5
(22) Anmeldetag: 02.02.1999
(51) Int. Cl.: F16L 49/04, F16L 23/028, F23C 3/00, B01J 19/02

(54) **Strahlrohranordnung**
Jet pipe device
Dispositif avec un tube à jet

(30) Priorität: 27.02.1998 DE 19808405
(43) Veröffentlichungstag der Anmeldung: 01.09.1999
(73) Patentinhaber: L B E Feuerungstechnik GmbH, 42389 Wuppertal (DE)
(72) Erfinder: Balgar, Günther, 45663 Recklinghausen (DE); Dittmann, Joachim, 58322 Schwelm (DE); Graf von Schweinitz, Horst, 58256 Ennepetal (DE); Seltmann, Michael, 58456 Witten (DE); Wegner, Joachim, Dipl.-Ing., 45657 Recklinghausen (DE)
(74) Vertreter: Harlacher, Mechthild, Dipl.-Ing.

(56) Entgegenhaltungen:
- DE-A- 2 536 748
- DE-A- 3 539 537
- DE-C- 19 505 401
- GB-A- 1 206 888
- US-A- 3 284 163
- US-A- 4 488 743

## Beschreibung

Die Erfindung betrifft eine Strahlrohranordnung mit einem keramischen Strahlrohr, einem das Strahlrohr tragenden Flansch und einer Dichtungseinrichtung mit mindestens einem Dichtelement zum Abdichten der Verbindung zwischen Strahlrohr und Flansch und mit einem Ringelement, das das Strahlrohr gegen den Flansch verspannt.

Strahlrohre werden häufig für die indirekte Beheizung oder Kühlung von Industrieöfen genutzt. Zu diesem Zweck werden die Strahlrohre durch eine Öffnung in der Ofenwand in den Ofen eingehängt. Da keine Gase, insbesondere keine Abgase, in die in der Regel aus Schutzgas bestehende Ofenatmosphäre einströmen dürfen, muß der Ofenflansch gegen das Strahlrohr abgedichtet sein. Dazu ist das Strahlrohr mit einem Flansch verbunden, welcher in der Regel aus dem gleichen Material wie der Ofenflansch besteht. Der dem Strahlrohr zugeordnete Flansch kann nach dem Einbau des Strahlrohres problemlos gegen den Ofenflansch abgedichtet werden.

Problematisch ist hingegen die Abdichtung der Verbindung zwischen keramischem Strahlrohr und Flansch. Zur Abdichtung dieser Verbindung ist es bekannt, eine dünne Blechhülse auf das keramische Strahlrohr aufzuschrumpfen und das freie Ende der Hülse gasdicht mit dem Flansch zu verschweißen. Nachteilhaft an dieser Verbindung zwischen Strahlrohr und Flansch ist, daß sie nicht zerstörungsfrei lösbar ist.

Aus der US-A-3284163 ist eine Strahlrohranordnung mit einer lösbaren Verbindung zwischen Strahlrohr und Flansch bekannt. Ein doppelwandiges Strahlrohr weist ein Innenrohr und ein Außenrohr auf, die einen Ringraum bilden, der von einem der Reaktionsmittel durchströmt wird. Die Wand des Außenrohres verläuft an dem Ende, das dem Flansch zugewandt ist, schräg nach außen. Im Bereich der Schrägen ist ein Ringelement angeordnet, mit dem das Außenrohr mittels Schrauben gegen den Flansch verspannt wird.

Wenn das Ringelement angezogen wird, wirkt auf das Außenrohr eine Kraft, die eine relativ große radiale und eine vergleichsweise kleine axiale Komponente aufweist. Die radiale Komponente trägt zu Abdichtung nicht bei. Es muß eine sehr große Anzugskraft aufgebracht werden, um eine gasdichte Abdichtung zwischen Strahlrohr und Flansch zu erreichen.

Aufgabe der Erfindung ist es daher, eine Strahlrohranordnung zur Verfügung zu stellen, die eine lösbare Verbindung zwischen Strahlrohr und Flansch aufweist, welche mit geringem Krafteinsatz gasdicht ist.

Diese Aufgabe wird bei einer gattungsgemäßen Strahlrohranordnung durch die kennzeichnenden Merkmale des Anspruches 1 gelöst.

Da der Spannring wie das Strahlrohr aus Keramik besteht, können beide fest miteinander verbunden werden, ohne daß thermische Spannungen bei Temperaturveränderungen auftreten. Vorhandene Strahlrohre können nachträglich mit dem keramischen Spannring versehen werden.

Das Ringelement kann beliebig geformt sein, es muß lediglich so dimensioniert sein, daß ein sicheres Einspannen des Spannringes zwischen Flansch und Ringelement möglich ist. Das Material des Ringelementes kann je nach Temperaturanforderungen frei gewählt werden. Die federnde Verbindung zwischen dem keramischen Strahlrohr und dem in der Regel aus Stahl bestehenden Flansch kann jederzeit zu Wartungs- oder Reparaturzwecken gelöst und erneut hergestellt werden.

Die Herstellungskosten für die erfindungsgemäße Strahlrohranordnung sind äußerst gering, da sowohl die benötigten Einzelteile sehr kostengünstig sind als auch der zeitliche und technische Aufwand zur Herstellung der Verbindung minimal sind. Insbesondere werden keine speziellen Werkzeuge und Maschinen zur Herstellung der erfindungsgemäßen Strahlrohranordnung benötigt.

Erfindungsgemäß ragt ein Teil des Spannringes über die Öffnung des Strahlrohres hinaus. Hiermit ist sichergestellt, daß das offene Ende des Strahlrohres den Flansch nicht direkt kontaktieren kann, wodurch die Abdichtung zwischen Flansch und Spannring beeinträchtigt würde. Zudem ist gewährleistet, daß die Fügestelle zwischen Spannring und Rohr nicht auf Scherung beansprucht ist.

Besonders vorteilhaft ist es, wenn der Spannring auf das keramische Strahlrohr aufsiliziert ist. Auf diese Weise sind Spannring und keramisches Strahlrohr langfristig dicht und mechanisch sehr stabil miteinander verbunden.

Bei einer weiteren Ausführungsform der Erfindung sind der Flansch und das Ringelement mit Schrauben, vorzugsweise mit Dehnschrauben, miteinander verschraubt.

Eine besonders vorteilhafte Weiterbildung der Erfindung besteht darin, daß die Schrauben mit ringförmigen Federelementen unterlegt sind.

Um den Einsatz längerer Dehnschrauben zu ermöglichen und um somit die Elastizität der Schraubverbindung zu vergrößern, sind den Dchrauben bei einem Ausführungsbeispiel Distanzrohre zugeordnet.

Zusätzlich oder alternativ zu der Verwendung von Dehnschrauben und von ringförmigen Federelementen kann der Flansch aus elastischem Material bestehen, um die federnde Einspannung des Spannringes zu gewährleisten.

Eine besonders elastische Verspannung ergibt sich dadurch, daß zwischen dem Ringelement und dem Spannring mindestens eine Dichtung angeordnet ist.

In bevorzugter Weiterbildung der Erfindung ist mit dem Ringelement eine geschlitzte Traghülse verbunden, die sich in Richtung fort vom Flansch erstreckt und federnd um das Strahlrohr gespannt ist. Eine derartige Traghülse hat sich insbesondere beim waagerechten Einbau des Strahlrohres bewährt. Der Grund hierfür ist, daß die oft sehr langen Strahlrohre bei waagerechtem Einbau beträchtliche Biegemomente auf die Fügestelle zwischen Spannring und Stahlrohr und auf den Flansch ausüben. Diese Biegemomente können durch eine geeignet dimensionierte Traghülse beträchtlich reduziert werden. Die unterschiedliche Ausdehnung des keramischen Strahlrohres und der vorzugsweise metallischen Traghülse wird durch den Schlitz der Traghülse und die federnde Verspannung kompensiert.

Eine besonders große Auflagefläche für das Strahlrohr ergibt sich dadurch, daß die dem Flansch abgewandte Stirnfläche der Traghülse abgeschrägt ist.

Die unterschiedlichen thermischen Ausdehnungskoeffizienten zwischen Traghülse und keramischen Strahlrohr können dadurch weiter ausgeglichen werden, daß die Traghülse aus dünnem Blech geformt und in axialer Richtung vorzugweise mehrfach teilgeschlitzt ist.

Die Traghülse läßt sich besonders einfach herstellen, wenn sie aus einem Blechzuschnitt geformt ist, welcher an seiner dem Flansch zugewandten Stirnseite Ansätze mit Bohrungen aufweist und an seinen beiden Längsseiten auf gleicher Höhe mit wenigstens einer Bohrung versehen ist. Die Ansätze an den Stirnseiten werden bei der Herstellung der Traghülse nach außen geklappt und ermöglichen eine einfache Verschraubung der Traghülse mit dem Ringelement. Mit Hilfe der Bohrungen auf den Längsseiten des Blechzuschnitts kann der Hülsenkörper mittels Schrauben zusammengehalten werden.

Besonders günstig ist es, eine Schicht aus Isoliermaterial zwischen Traghülse und Strahlrohr anzuordnen. Auf diese Weise wird die Betriebstemperatur der Traghülse im Vergleich zum Strahlrohr gesenkt. Der höhere Ausdehnungskoeffizient der Traghülse wird somit zusätzlich durch eine geringere Betriebstemperatur der Traghülse kompensiert.

Weitere vorteilhafte Ausführungsbeispiele der Erfindung sind in den Unteransprüchen gekennzeichnet.

Im folgenden wird die Erfindung anhand eines in der Zeichnung dargestellten Ausführungsbeispiels näher erläutert. In der Zeichnung zeigen:
- Fig. 1: einen Längsschnitt durch ein erstes Ausführungsbeispiel einer erfindungsgemäßen Strahlrohranordnung;
- Fig. 2: eine Draufsicht auf die Abwicklung der geschlitzten Traghülse gemäß Figur 1; und
- Fig. 3: einen Längsschnitt durch ein zweites Ausführungsbeispiel der erfindungsgemäßen Strahlrohranordnung.

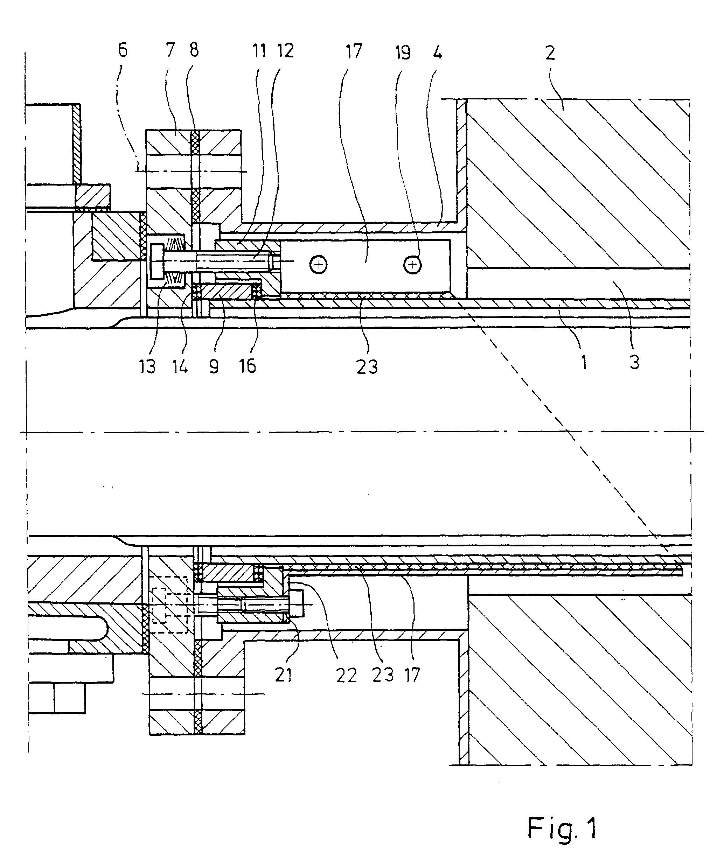

Fig. 1 zeigt ein in einen Industrieofen eingebautes Strahlrohr 1. Vom Industrieofen ist lediglich die Ofenwand 2 dargestellt, welche eine Öffnung 3 zur Aufnahme des Strahlrohres 1 aufweist. Die Ofenwand 2 ist außen mit einem ringförmigen Ofenflansch 4 versehen. Der Ofenflansch 4 ist mit Hilfe von Schrauben 6 mit einem dem Strahlrohr 1 zugeordneten Flansch 7 verschraubt. Zwischen Ofenflansch 4 und Flansch 7 sind Dichtscheiben 8 zur Abdichtung der Schraubverbindung vorgesehen.

Der Flansch 7 ist dadurch gegen das Strahlrohr 1 abgedichtet, daß ein über das offene Ende des Strahlrohres 1 vorstehender Spannring 9 auf das Strahlrohres 1 aufsiliziert ist. Der Spannring 9 ist zwischen dem Flansch 7 und einem Ringelement 11 federnd eingespannt, und zwar mit Hilfe mehrerer Schrauben 12, deren Kopf mit ringförmigen Federelementen 13 unterlegt ist. Die Federelemente 13 gewährleisten eine im wesentlichen gleichbleibende Druckkraft bei Ausdehnung des Spannrings 9. Ein ringförmiges Dichtelement 14 ist zur Abdichtung zwischen dem Flansch 7 und dem Spannring 9 angeordnet. Außerdem ist eine ringförmige Dichtung 16 zwischen dem Spannring 9 und dem Ringelement 11 angeordnet.

Bei Temperaturbelastungen dehnt sich der keramische Spannring 9 zwar weniger aus als der metallische Flansch 7 und das metallische Ringelement 11, jedoch kompensieren die ringförmigen Federelemente 13 die unterschiedlichen Längenausdehnungen der Komponenten vollständig. Auf diese Weise gewährleistet die Anordnung bei jeder Betriebstemperatur eine zuverlässige Abdichtung zwischen Strahlrohr 1 und Flansch 7. Vorteilhaft ist zudem, daß die ringförmigen Federelemente 13 mit Abstand zum Strahlrohr angeordnet sind und somit insgesamt niedrigeren Temperaturen als das Strahlrohr ausgesetzt werden. Somit kann kostengünstiges Material für die Herstellung der Federelemente 13 verwendet werden. Die Verbindung zwischen Flansch 7 und Strahlrohr 1 kann durch Lösen aller Schrauben 12 jederzeit einfach gelöst werden.

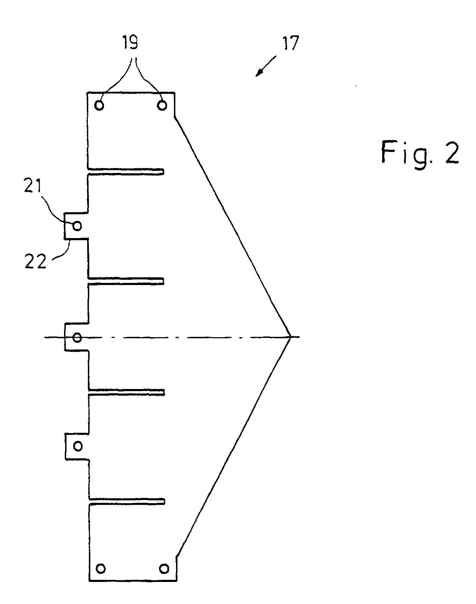

Zur Halterung des Strahlrohres 1 ist dieses mit einer geschlitzten Traghülse 17 umgeben. Die Traghülse 17 ist in Fig. 2 abgewickelt dargestellt.

Die Traghülse weist in axialer Richtung vier Teilschlitze auf. Sie ist außerdem an beiden Längsseiten jeweils auf gleicher Höhe mit zwei Bohrungen 19 versehen. Mit Hilfe dieser Bohrungen ist die Traghülse 17 längsseitig zusammengeschraubt. An ihrer dem Flansch 7 zugewandten Stirnseite weist die Traghülse mit Bohrungen 21 versehene Ansätze 22 auf. Bei der Fertigung der Traghülse 17 werden die Ansätze 22 nach außen geklappt. Wie Fig. 1 zu entnehmen ist, ist die Traghülse 17 mit Hilfe der Bohrungen 21 an dem Ringelement 11 festgeschraubt. Die dem Flansch 7 abgewandte Stirnfläche der Traghülse 17 ist abgeschrägt. Dadurch hat das Strahlrohr 1 in der Traghülse eine besonders große Auflagefläche.

Die dünne geschlitzte Traghülse 17 ist federnd um das Strahlrohr 1 gespannt. Auf diese Weise sorgt die Traghülse 17 auch bei Temperaturschwankungen und damit verbundenen unterschiedlichen Längenausdehnungen von Traghülse und Strahlrohr 1 für einen guten Kontakt zwischen Strahlrohr und Traghülse. Somit stützt die Traghülse 17 das Strahlrohr 1 unabhängig von der Betriebstemperatur und kann das Angreifen von Biegemomenten an der Fügestelle und am Flansch 7 weitgehend vermeiden.

Zwischen Traghülse 17 und Strahlrohr 1 ist eine Schicht aus Isoliermaterial 23 vorgesehen. Mit Hilfe dieser Schicht aus Isoliermaterial gelingt es, die sich stärker als das Strahlrohr 1 ausdehnende Traghülse 17 stets auf einer geringeren Temperatur als das Strahlrohr selbst zu halten. Dadurch können unterschiedliche Längenausdehnungen zwischen Traghülse 17 und Strahlrohr 1 zusätzlich ausgeglichen werden.

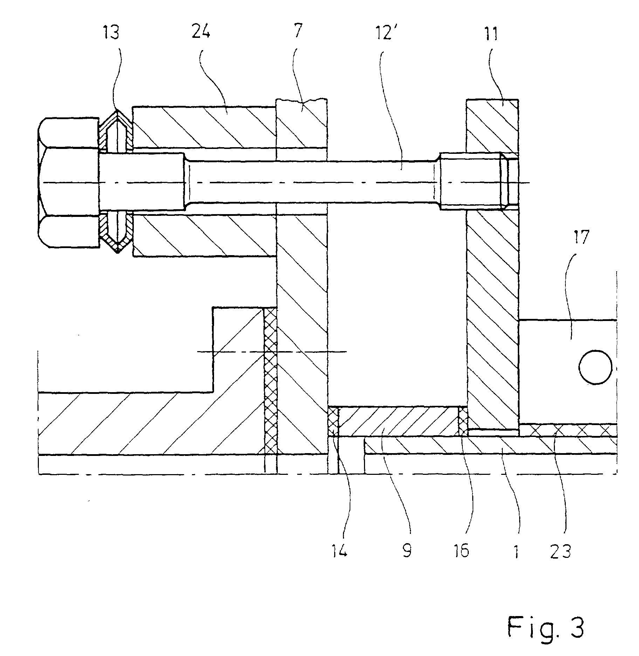

Fig. 3 zeigt einen Ausschnitt eines alternativen Ausführungsbeispiels der Erfindung. Dieses Ausführungsbeispiel unterscheidet sich lediglich dadurch von dem in Fig. 1 dargestellten Ausführungsbeispiel, daß statt der Schraube 12 eine Dehnschraube 12' verwendet wird und daß sich diese durch ein Distanzrohr 24 hindurch erstreckt. Das Distanzrohr 24 stützt sich auf dem Rand der für die Dehnschraube 12' vorgesehenen Bohrung des Flansches ab. Genauso wie in Fig. 1 ist der Kopf der Dehnschraube 12' mit ringförmigen Federelementen 13 unterlegt. Die aufgrund des verwendeten Distanzrohres bersonders lange Dehnschraube 12' hat eine hohe Elastizität und sorgt daher zusammen mit den Federelementen 13 für eine besonders dichte Verbindung zwischen Flansch 7 und Spannring 9.

Auch diese Anordnung läßt sich einfach und ohne großen technischen Aufwand herstellen. Beide Ausführungsbeispiele ermöglichen eine extrem kompakte Anbindung eines Strahlrohres an einen Flansch.

Im Rahmen der Erfindung sind zahlreiche Abwandlungsmöglichkeiten gegeben. Beispielsweise kann die Länge und die Anordnung der verwendeten Distanzrohre beliebig variiert werden. Außerdem kann zusätzlich oder alternativ zum Flansch das Ringelement aus elastischem Material bestehen. Auch die Form der Traghülse und die Dicke des Spannringes können je nach Anwendungszweck frei gewählt werden. Schließlich kann auch die Dehnschraube mit einer Schicht aus Isoliermaterial umgeben sein.

## Patentansprüche

1. Strahlrohranordnung, mit
- einem keramischen Strahlrohr (1),
- einem das Strahlrohr (1) tragenden Flansch (7) und
- einer Dichtungseinrichtung mit mindestens einem Dichtelement (14) zum Abdichten der Verbindung zwischen Strahlrohr (1) und Flansch (7) und mit einem Ringelement (11), das das Strahlrohr (1) gegen den Flansch (7) verspannt,
**dadurch gekennzeichnet,**
**daß** die Dichtungseinrichtung einen separaten keramischen Spannring (9) aufweist, der auf dem Strahlrohr (1) sitzt und mit diesem fest und abgedichtet verbunden ist, daß das Ringelement (11) sich auf der dem Flansch (7) abgewandten etwa senkrecht zum Strahlrohr (1) verlaufende Stirnfläche des Spannringes (9) abstützt, daß der Spannring (9) federnd zwischen dem Flansch (7) und dem Ringelement (11) eingespannt ist, daß das Dichtelement (14) zwischen dem Spannring (9) und dem Flansch angeordnet ist und daß ein Teil des Spannringes (9) über die Öffnung des Strahlrohres (1) hinausragt, so daß das offene Ende des Strahlrohres (1) den Flansch (7) nicht direkt kontaktieren kann.

2. Strahlrohranordnung nach Anspruch 1,
**dadurch gekennzeichnet, daß** der Spannring (9) auf das keramische Strahlrohr (1) aufsiliziert ist.

3. Strahlrohranordnung nach Anspruch 1 oder 2,
**dadurch gekennzeichnet, daß** der Flansch (7) und das Ringelement (11) mit Schrauben (12), vorzugsweise mit Dehnschrauben (12') miteinander verbunden sind.

4. Strahlrohranordnung nach Anspruch 3,
**dadurch gekennzeichnet, daß** die Schrauben (12; 12') mit ringförmigen Federelementen (13) unterlegt sind.

5. Strahlrohranordnung nach Anspruch 3 oder 4,
**dadurch gekennzeichnet, daß** den Schrauben Distanzrohre (24) zugeordnet sind.

6. Strahlrohranordnung nach einem der Ansprüche 1 bis 5,
**dadurch gekennzeichnet, daß** der Flansch (7) aus elastischem Material besteht.

7. Strahlrohranordnung nach einem der Ansprüche 1 bis 6,
**dadurch gekennzeichnet, daß** zwischen dem Ringelement (11) und dem Spannring (9) mindestens eine Dichtung (16) angeordnet ist.

8. Strahlrohranordnung nach einem der Ansprüche 1 bis 7,
**dadurch gekennzeichnet, daß** mit dem Ringelement (11) eine geschlitzte Traghülse (17) verbunden ist, die sich in Richtung fort vom Flansch (7) erstreckt und federnd um das Strahlrohr (1) gespannt ist.

9. Strahlrohranordnung nach Anspruch 8,
**dadurch gekennzeichnet, daß** die dem Flansch (7) abgewandte Stirnfläche der Traghülse (17) abgeschrägt ist.

10. Strahlrohranordnung nach Anspruch 8 oder 9,
**dadurch gekennzeichnet, daß** die Traghülse (17) aus dünnem Blech geformt und in axialer Richtung vorzugsweise mehrfach teilgeschlitzt ist.

11. Strahlrohranordnung nach Anspruch 10,
**dadurch gekennzeichnet, daß** die Traghülse (17) aus einem Blechzuschnitt geformt ist, welcher an seiner der Flansch (7) zugewandten Stirnseite Ansätze (22) mit Bohrungen (21) aufweist und an beiden Längsseiten auf gleicher Höhe mit wenigstens einer Bohrung (19) versehen ist.

12. Strahlrohranordnung nach einem der Ansprüche 8 bis 11,
**dadurch gekennzeichnet, daß** eine Schicht aus Isoliermaterial (23) zwischen Traghülse (17) und Strahlrohr (1) angeordnet ist.

## Claims

1. Jet tube arrangement with
- a ceramic jet tube (1),
- a flange (7) bearing the jet tube (1) and
- a sealing device with at least one sealing element (14) to seal the connection between the jet tube (1) and flange (7) and with a ring element (11) which holds the jet tube (1) tight against the flange (7),
**characterised in that**
the sealing device exhibits a separate ceramic tension ring (9) which is positioned on the jet tube (1) and is firmly connected and sealed therewith, that the ring element (11) rests on the end of the tension ring (9) facing away from the flange (7) and running virtually vertical to the jet tube (1), that the tension ring (9) is spring-mounted between the flange (9) and the ring element (11), that the sealing element (14) is arranged between the tension ring (9) and the flange and that part of the tension ring (9) protrudes over the opening of the jet tube (1), so that the open end of the jet tube (1) cannot come in direct contact with the flange (7).

2. Jet tube arrangement according to claim 1,
**characterised in that** the tension ring (9) is fixed with silicon on the ceramic jet tube (1).

3. Jet tube arrangement according to claim 1 or 2,
**characterised in that** the flange (7) and the ring element (11) are connected to each other by means of screws (12), preferably by means of expansion screws (12').

4. Jet tube arrangement according to claim 3,
**characterised in that** annular spring elements (13) are positioned under the screws (12;12').

5. Jet tube arrangement according to claim 3 or 4,
**characterised in that** distance tubes (24) are assigned to the screws.

6. Jet tube arrangement according to any one of claims 1 through 5,
**characterised in that** the flange (7) consists of elastic material

7. Jet tube arrangement according to any one of claims 1 through 6,
**characterised in that** at least one seal (16) is arranged between the ring element (11) and the tension ring (9).

8. Jet tube arrangement according to any one of claims 1 though 7,
**characterised in that** a slit support sleeve (17) is connected to the ring element (11), said support sleeve (17) stretching away from the flange (7) and being spring-mounted around the jet tube (1).

9. Jet tube arrangement according to claim 8,
**characterised in** the that the end of the support tube (17) facing away from the flange (11) is bevelled.

10. Jet tube arrangement according to claim 8 or 9,
**characterised in that** the support sleeve (11) is made of thin sheet and is preferably partially slit several times in the axial direction.

11. Jet tube arrangement according to claim 10,
**characterised in that** the support sleeve (17) is made of a sheet blank which exhibits on the end facing the flange (7) plugs (22) with borings (21) and is provided with at least one boring (19) at the same height on both longitudinal sides.

12. Jet tube arrangement according to any one of claims 8 through 11,
**characterised in that** a layer of insulating material (23) is arranged between the support tube (17) and the jet tube (1).

## Revendications

1. Dispositif avec un tube à jet, avec
- un tube en acier céramique (1),
- une bride (7) portant le tube en acier (1) et
- une garniture d'étanchéité avec au moins un élément d'étanchéité (14) pour rendre étanche la liaison entre le tube en acier (1) et la bride (7) et avec un élément annulaire (11) pour haubaner le tube en acier (1) contre la bride (7),
**caractérisé par le fait**
**que** la garniture d'étanchéité présente un anneau tendeur céramique à part (9) posé sur le tube en acier (1) et fermement et de façon étanche lié avec celui-ci, que l'élément annulaire (11) s'appuie sur la surface de front de l'anneau tendeur (9) opposé à la bride (7) et à peu près perpendiculaire au tube en acier (1), que l'anneau tendeur (9) est tendu de manière élastique entre la bride (7) et l'élément annulaire (11), que l'élément d'étanchéité (14) est disposé entre l'anneau tendeur (9) et la bride et qu'une partie de l'anneau tendeur (9) saillit l'ouverture du tube en acier (1) de la sorte que l'extrémité ouverte du tube en acier (1) n'entre pas en contact direct avec la bride (7).

2. Dispositif avec un tube à jet selon la revendication 1,
**caractérisé par le fait que** l'anneau tendeur (9) est silicé sur le tube en acier céramique (1).

3. Dispositif avec un tube à jet selon l'une des revendications 1 ou 2,
**caractérisé par le fait que** la bride (7) et l'élément annulaire (11) sont liés l'un à l'autre par des vis (12), de préférence par des vis à tige allégée (12').

4. Dispositif avec un tube à jet selon la revendication 3,
**caractérisé par le fait que** des éléments à ressort (13) sont placés en dessous des vis (12, 12').

5. Dispositif avec un tube à jet selon l'une des revendications 3 ou 4,
**caractérisé par le fait que** des douilles d'écartement (24) sont attribuées aux vis.

6. Dispositif avec un tube à jet selon l'une des revendications 1 à 5,
**caractérisé par le fait que** la b ride (7) consiste en matière élastique.

7. Dispositif avec un tube à jet selon l'une des revendications 1 à 6,
**caractérisé par le fait qu'**entre l'élément annulaire (11) et l'anneau tendeur (9) est disposée au moins une étanchéité (16).

8. Dispositif avec un tube à jet selon l'une des revendications 1 à 7,
**caractérisé par le fait qu'**une douille de support (17) à fente est liée à l'élément annulaire (11), qui s'étend en s'éloignant de la bride (7) et qui est tendue de façon élastique autour du tube en acier (1).

9. Dispositif avec un tube à jet selon la revendication 8,
**caractérisé par le fait que** la surface de front de la douille de support (17) opposée à la bride (7) est chanfreinée.

10. Dispositif avec un tube à jet selon l'une des revendications 8 ou 9,
**caractérisé par le fait que** la douille de support (17) est formée en tôle mince présentant en direction axiale de préférence plusieurs fentes partielles.

11. Dispositif avec un tube à jet selon la revendication 10,
**caractérisé par le fait que** la douille de support (17) est formée en tôle découpée présentant à la partie frontale tournés vers la bride (7) des saillies (22) avec des alésages (21) et étant munie aux deux parties latérales d'au moins un alésage (19) à la même hauteur.

12. Dispositif avec un tube à jet selon l'une des revendications 8 à 11,
**caractérisé par le fait qu'**entre la douille de support (17) et le tube en acier (1) est disposée une couche en matière isolante (23).
